# EUROPEAN PATENT SPECIFICATION

(11) **EP 3 907 196 B1**
(45) Date of publication and mention of the grant of the patent: **03.05.2023**
(21) Application number: 20173308.6
(22) Date of filing: 06.05.2020
(51) Int. Cl.: C03B 5/04, C03B 5/16, C03B 5/185, C03B 5/193, C03B 5/20, C03B 5/235, C03B 5/44

(54) **FURNACE FOR SIMULTANEOUS CONTINUOUS MELTING OF MULTIPLE GLASSES**
OFEN FÜR GLEICHZEITIGES SCHMELZEN MEHRERER GLÄSER
FOUR POUR FONDRE PLUSIEURS VERRES SIMULTANÉMENT

(43) Date of publication of application: 10.11.2021
(73) Proprietor: Forglass Engineering spolka z ograniczona odpowiedzialnoscia, 30-415 Krakow (PL)
(72) Inventor: Klisch, Marian, 38-400 Krosno (PL); Knast, Piotr, 31-157 Krakow (PL); Jedrzejczyk, Leszek, 97-310 Baby (PL); Dylag, Andrzej, 32-091 Michalowice (PL); Zomerski, Krysztof, 30-198 Krakow (PL)
(74) Representative: AOMB Polska Sp. z.o.o.

(56) References cited:
- EP-A1- 2 889 274
- US-A- 808 804
- US-A- 2 538 956

## Description

### Field of the invention

The invention relates to a furnace for simultaneous continuous melting of multiple different glasses.

### Prior art

Furnace designs are known having ceramic walls arranged transversely to the glass flow direction, said walls having a height smaller than the glass surface, known as weir walls, designed to reduce the interaction of the main convection currents in a molten glass: the return current and the working current.

For example, US 2,203,269 discloses a furnace design with a tank equipped with a ceramic weir wall built at its bottom and allowing molten glass to flow only above its upper surface and thus effectively separating the areas where melting and fining/refining of the melt takes place. The furnace of the described construction allows to melt only one type of glass at a time. On the other hand, a solution allowing a similar effect to be achieved by means of a low barrier wall cooperating with bubbling and electrode boosting lines installed in front of it and the electrode boosting line behind it is described in US 5,766,296. Both these prior art solutions allow only one type of glass to be molten at a time.

Separation of tank areas in which melting and fining/refining takes place by means of two cooperating elements: a weir wall built in the tank and a suspended wall immersed in the melt from the top is described in US 2,677,003. The furnace allows only one type of glass to be molten at a time.

US 5,078,777 describes the construction of a multi-segment furnace with separate zones, in which the batch melting zone is separated from the fining/refining zone by means of a submerged throat. This solution allows to maintain significantly different temperatures in individual furnace segments, e.g. 1350°C in the batch melting zone and 1500°C in the refining zone. The furnace allows only one type of glass to be molten at a time.

In known solutions only such separations of melting tanks of glass melting furnaces were used, which were aimed at separating - as fully as possible - their zones, in which different stages of the melting process take place: heating of the batch and reactions between the batch components, the sand dissolution in a primary melt, fining, resorption as well as cooling and thermal homogenization prior to forming. These known constructions were aimed above all at prevent mixing of the molten and refined glass with a primary melt containing unmolten relics of raw materials and gas bubbles. All the furnaces of the prior art solutions discussed above allow only one type of glass to be molten at a time.

US808804 A teaches a furnace for simultaneous continuous melting of two different glasses, the furnace having one common combustion chamber and two or more separate melting tanks, each of the tanks being provided with its own doghouse and molten glass outlet. Tank furnaces as in US808804 A are also disclosed in US2538956 A and EP2889274 A1.

### Summary of the invention

The subject of the invention as defined in claim 1 is a furnace for simultaneous continuous melting of many different glasses, having one common combustion chamber constituting one common firing system and two or more melting tanks having common walls separating adjacent tanks. The common separating walls may be in form of a solid structure made of ceramic refractory materials or may formed of glass frozen as a result of a cooling medium flow through a system of coolers. Each of these melt tanks allows to melt glass having a color or chemical composition different from the color or chemical composition of the glass in the second tank/other tanks in such a way that at no stage of the process and in no area of the furnace these glasses connect with each other and flow through a common part of the furnace. Height of the common walls separating adjacent tanks is greater than the filling level of each of the adjacent tanks measured each time from the bottom of the tank to the surface of glass being molten in this tank and each of these tanks is provided with its own doghouse for feeding a batch of raw materials suitable for the glass molten in this tank and its own throat, through which the glass molten in this tank is directed to a distributor and a system of feeders, from which it is fed to product forming devices.

### Detailed description of the invention

The furnace according to the invention solves several problems that glass manufacturers must often face when using furnaces provided with only one melting tank:
1. A furnace with several melting tanks and a common combustion chamber (one firing system) allows to melt all the glasses with a lower specific energy consumption and at lower coefficients of emission of substances harmful to the environment, dust, NOₓ, SOₓ and CO₂, than if each of the glasses was molten separately in separate furnaces with the same total melting capacity as the multi-tank furnace. These indicators can be further improved by the current adjustment of changes in the pull output of glass in each of these tanks in such a way that their sum was as close as possible to the value of total pull for which the furnace operates in the most economical way.
2. The furnace with several melting tanks enables more economical realization of production orders - it allows to melt smaller quantities of a given type of glass while maintaining energy indicators characteristic for large furnaces, resulting in the possibility of lowering the quantitative threshold of the minimum order, and thus allows reducing the time of completing the order and limits the glass production for expected yet placed orders.
3. A furnace with several tanks enables the production of several kinds of the same type of glass that differ in one or several physical properties, e.g. chemical durability, mechanical strength or colorlessness or hue, resulting from the specific requirements of certain customers. Improvement of any of these properties requires an increase in the proportion or special addition of expensive glass components, e.g. Al₂O₃, ZnO, K₂O, MgO, etc. and use of new or better grades, i.e. more expensive raw materials. The multi-furnace also allows the simultaneous production of several kinds of the same type of glass differing in technological properties such as: cooling time - CT, relative machine speed - RMS, or e.g. liquidus temperature (for providing a safe difference between the gob temperature and the upper crystallization temperature). Such situation is quite common when the glass molten in one furnace is used for manufacturing products significantly differing in weight (size), shape, wall or bottom thickness. To obtain these expected differences in technological properties, it is necessary to increase or decrease the concentration of alkali, the ratio of MgO/CaO and/or Al₂O₃/SiO₂. At present, where the same glass is supplied to machines producing different types of products, its chemical composition is a result of a compromise based on an attempt to reconcile the conflicting requirements of individual forming machines. The use of the multi-tank furnace according to the invention allows to optimize the compositions in individual tanks in terms of the requirements of the machines to which the glass is supplied without having to take into account the requirements of other machines that are fed with the glass from other tanks of this furnace. In this way, the multi-tank furnace allows for a significant reduction of waste production and also a reduction of energy consumption in the system of distributors and forehearths, associated with the necessary operations of cooling or heating the glass. Rejection cullet from individual lines is preferably collected selectively, but is also re-usable when mixed.
4. The furnace with several melting tanks allows to increase the use of rejection cullet. Rejection glass from one tank unsuitable for re-using in melting in the same tank due to its color, hue or other parameters can be used in another tank. This situation occurs quite often when glass color change takes place in a given furnace or glass is colored in forehearths. Waste of such glass can, however, be used to a large extent as a component of a batch for a colored glass: amber, green, olive and even black produced in one of the tanks and/or colored or supplementary colored in a forehearth, which is a very attractive alternative to resale such cullet for landfill and road construction purposes. The furnace with several melting tanks also allows to limit the number of technologically complicated changes in the glass color, such as from flint to amber, and thus allows to reduce the amount of glass waste difficult to reuse in a production cycle.
5. A multi-tank furnace can also be the most advantageous option to increase the melting capacity of an existing furnace in a situation, in which any further possible enlargement of the tank would involve a disturbance of its proportions, i.e. when the only option is to change its width.

The number of tanks in the multi-tank furnace results from the demand of glassworks for various types of glass in combination with the production portfolio and the number of production lines. Given this, the most common case is a two-tank furnace, less often a three-tank one. Furnaces with a larger number of tanks, however, are quite unlikely due to the criterion defined above.

A number of doghouses and throats corresponds to the number of tanks in a furnace. Two-tank furnaces and external tanks of furnaces having three or more tanks can be equipped with doghouses and throats located in side walls. Two-tank furnaces and internal tanks of furnaces having at least three tanks can be equipped with doghouses located in a rear wall and throats located in a front wall.

Multi-tank furnaces can be equipped with regenerative U-flame, double U-flame or cross-flame firing system. Multi-tank furnaces can be equipped with a cross-flame regenerative firing system.

All multi-tank furnaces can be equipped with a recuperative firing system based on gas/air burners. All multi-tank furnaces can be fired with a gas/air, gas/oxygen or oil/oxygen mixture.

It is recommended to provide at least one, and most preferably each of the tanks of a multi-tank furnace with an independent electric boosting system.

In one possible embodiment of the invention, the furnace is equipped with two melting tanks connected by a common wall or three melting tanks with two common walls, said tanks having flat bottom, i.e. a uniform depth along their entire length. In another possible embodiment of the invention, the furnace is equipped with two melting tanks connected by a common wall or three melting tanks with two common walls, said tanks having variable depth. In the preferred variant, all tanks are shallower in the melting part and deeper in the refining part.

The depth of melting tanks of a multi-tank furnace is selected based on the color of the glass to be molten and the type and configuration of additional energy sources used. The greater the share of Joule energy generated and delivered directly into the glass melt by the electrodes immersed in it, the greater the tank depth can be. As a rule, the criteria for selecting the tank depth and its change profile along the furnace axis, applicable to the construction of single-tank furnaces, apply without modification to multi-tank furnaces.

In one of the possible implementations of the invention, in the position of changing the tank's depth there is a ceramic weir wall reducing the clearance between the top surface of this wall and the glass melt surface between 50 and 80 cm; in yet another implementation instead of a high weir wall, a ceramic threshold is installed, up to 25 cm high measured from the furnace bottom in the shallow part. In a further embodiment of the invention, a barrier from one or two electrode lines is placed in the position of change of the tank's depth; in another implementation it is a barrier from one or two lines of bubbling nozzles, and in yet another - a barrier from one or two lines of integrated electrodes-bubbling nozzles. The use of any combination of the additional energy sources listed above in the multi-tank furnace also belongs to the possible embodiments of the present invention.

The width of tanks in a multi-tank furnace may be the same or different, where the limitation concerns the minimum tank width, which is associated with providing the control over the layer arrangement of the batch fed into the furnace. For furnaces with side doghouses, the recommended minimum tank width is 4 m. For furnaces with doghouses located at a rear wall, the recommended minimum tank width is 2.5 m.

In multi-tank furnaces according to the invention, it is generally more preferred to use an identical glass depth profile in both tanks, although deviations from this rule are permissible, and the maximum difference in tank depth can be 0.3 m. For flat bottom multi-tank furnaces, i.e. with a constant depth, which are dedicated for melting amber and/or olive and/or green glasses, their depth ranges from 1.2 to 1.45 m. The same furnaces for melting flint glass have a depth ranging from 1.3 to 1.6 m. Multi-tank furnaces with variable depth dedicated for melting amber and/or olive and/or green glasses have a depth of 1.2 to 1.4 in a shallow part (melting zone) and from 1.5 to 1.85 in a deep part (refining and resorption zone). The same furnaces designed for melting flint glass have a depth of 1.3 to 1.6 in a shallow part (melting zone) and from 1.8 to 2.35 in a deep part (refining and resorption zone). Precise choice of tank's depth is based on the results of modeling simulation according to the criteria: 1) minimum and maximum temperature at the bottom in the batch melting zone, which are 1250 and 1400°C, respectively, and 2) minimum and maximum temperature at the bottom before the throat entrance, which is 1330 and 1400°C, respectively, i.e. such that guarantee the proper course of individual melting stages at the lowest energy consumption and maintain the corrosion rate of the materials built into the bottom at a level, which guarantees the expected length of the furnace campaign.

A special implementation of the multi-tank furnace are furnaces with a continuous depth change in the melting zone as well as refining and resorption, i.e. with the bottom rising in the melting zone and leaning in the refining zone. In the melting zone, the inclination is from 1 to 3%, where the greatest depth is at the back wall of the tank and the smallest in a line overlapping with the location of the hot spot in the furnace, i.e. the maximum temperature point. From this line the trend of the tank depth change is reversed, the depth is increased up to the throat. The bottom inclination in this part is from 3 to 5%. A barrier boost is placed in the top peak of the bottom, said barrier boost being preferably made of integrated electrodes-bubbling nozzles or a system of bubbling nozzles or a combination thereof. This solution limits or even completely eliminates the phenomenon of "short circuit" of convection currents circulating in the melting zone and in the refining zone, which is responsible for the disadvantageous phenomenon of directing to the throat of glass melt of poor quality with the shortest residence times in the furnace.

The design of the common combustion chamber of a multi-tank furnace is arranged in a way that allows obtaining the melting parameters suitable for all molten glasses in all tanks connected by at least one common wall with the adjacent tank or tanks and using a common superstructure, i.e. a common combustion chamber of the furnace. Due to the presence of internal walls, common for two adjacent tanks, it is preferable to use superstructure walls higher by at least 5, and most preferably by at least 10 cm compared to a single-tank furnace of the same melting surface. The decision on the advisability of changing the height and the extent of such change is made on the basis of the results of modeling simulations based on the criteria: 1) the minimum density of the energy flux directed from the combustion chamber to the glass and the batch, which should not be lower than 80 kW/m² and 2) the maximum NOₓ emissions, which should not be higher than 800 mg NO₂ per 1 mₙ³ of dry flue gases containing 8% O₂.

In cases where a multi-tank furnace replaces a standard furnace with one tank, previously operated in the same place and this operation is not accompanied by a change in the melting surface in the new furnace, in order to reduce the costs of reconstruction, it is most advantageous if the design of its superstructure is unchanged. When the operational parameters of the furnace undergoing reconstruction, such as: the index of specific energy consumption per unit mass of molten glass or the emission level of pollutants, e.g. nitrogen oxides, are worse than the reference values for furnaces of similar size melting similar glass from a similar batch of raw materials, the superstructure of the multi-tank furnace has a modified design. In one embodiment of the invention, when the old furnace showed problems in obtaining glass free from gas bubbles or reaching the maximum temperature in the fining area of the furnace, which was due to bad flame geometry, the superstructure walls are raised by 5, 10 or more centimeters. When the density of the energy flux directed to the glass in the old furnace is lower than 80 kW/m² and this result cannot be improved by changing the geometry of the burner port necks and/or the number of burner nozzles or/and their design, the superstructure walls in a two-tank furnace are lowered by 5, 10 or more centimeters.

In the case of furnace modernization, whereby the total area of all melting tanks is greater than the area of one tank before the reconstruction, the volume of superstructure area, i.e. height and/or width of burner passages, number and dimensions of burner nozzles, and sometimes also volume, i.e. height and/or width and/or length of the regenerator chambers must also be enlarged accordingly so as to be able to provide a greater amount of heat and/or to obtain a higher intensity of the heat flux in accordance with the total melting energy demand of the two glasses. The decision on the advisability of changing and the extent of the change of one, several or all parameters of the combustion chamber is made on the basis of the results of modeling simulations based on the criteria: 1) the minimum density of the energy flux directed from the combustion chamber to the glass and the batch, which should not be lower than 80 kW/m² and 2) the maximum NOₓ emission, which should not be higher than 800 mg NO₂ per 1 mₙ³ dry exhaust containing 8% O₂.

The design and parameters of a common furnace firing system, i.e. the number and shape of the burner ports, the number, dimensions and position of the burner nozzles, gas distribution between the burner nozzles, gas and air outlet velocities, shaping together the longitudinal and transverse temperature profiles, flue gases composition, heat flux intensity, are selected in such a way that it is possible to simultaneously obtain two glasses in the desired quantity and quality, also in terms of physicochemical properties, primarily color parameters. As a matter of principle it is assumed that the parameters of the firing system are selected as a compromise between the extreme requirements of the melting conditions of all glasses molten simultaneously in this multi-tank furnace. When choosing combustion chamber design solutions, i.e. the number and shape of the burner ports, the number, dimensions and position of the burner nozzles, gas distribution between the burner nozzles, gas and air outlet velocities, the priority is to obtain uniform flame and flue gases coverage of both tanks and the required melting needs - heat flux intensity not less than 80 kW/m², preferably not less than 100 kW/m².

The selection parameter for choosing glasses for simultaneous melting in a multi-furnace furnace according to the present invention is the required partial pressure of oxygen physically dissolved in the melt for each of these glasses, usually expressed as its decimal logarithm - lgpO₂, because this parameter determines the thermal conductivity and the glass color, and at the same time the course of the refining process and the tendency of the glass mass to generate foam in contact with a batch or atmosphere with different redox properties - Table 1.

**Table 1: Oxygen partial pressure [in bars] in flint, amber and green glasses as a function of temperature.**

| Temperature [°C] | flint | | amber | | green | |
|---|---|---|---|---|---|---|
| | pO₂ | lgpOz | pO₂ | lgpO₂ | pO₂ | lgpO₂ |
| 1100 | 8.76E-07 | - 6.17 | | | 1.10E-07 | - 8.65 |
| 1150 | 5.24E-06 | - 5.28 | 2.20E-09 | - 8.65 | 5.00E-07 | - 8.00 |
| 1200 | 4.07E-05 | - 4.39 | 1.00E-08 | - 8.00 | 1.60E-06 | - 7.40 |
| 1250 | 2.00E-04 | - 3.70 | 4.00E-08 | -7.40 | 6.75E-05 | - 6.90 |
| 1300 | 1.00E-03 | - 3.00 | 1.30E-07 | - 6.90 | 2.75E-05 | -6.40 |
| 1350 | 5.25E-03 | -2.28 | 4.00E-07 | - 6.40 | 1.23E-04 | - 6.00 |

Appropriate concentration of oxygen physically dissolved in the glass melt determines also the possibility of obtaining a specific glass color, because oxygen forms equilibrium systems with other multivalent glass components, including iron, chromium, sulfur, forming colored chromophores. The equilibrium of oxygen dissolved in the glass melt is also affected by the gas atmosphere above the glass melt surface. However, due to the high viscosity of the molten glass and the associated impediments to mass transport in the ionic, atomic and multimolecular forms, the diffusion processes are slow and under industrial melting conditions nothing more but local equilibrium states are achieved in small volumes of melt.

For the reasons described above, the partial pressure of oxygen physically dissolved in the melt depends more on the composition of the raw material batch, primarily the proportion of oxidizing and reducing components, quantified by the Batch Redox Number (BRN) than on the composition of the flue gases atmosphere above the melt surface in the furnace. This situation is advantageous from the viewpoint of achieving the goal described in the present invention, i.e. the simultaneous melting of two or more glasses in adjacent tanks using heat from one common combustion chamber, because in principle only glasses with extreme BRN values cannot be molten in such a device. Such extreme cases are oxidized flint (colorless) glasses molten from batches having BRN higher than +8, sometimes higher than +15, and rarely even higher than +25, and amber and olive-colored glasses molten from batches having BRN very rarely higher than -16, rarely higher than -20, and most often having BRN in ranging from -20 to -30. Any other combinations of glasses from the group: amber, olive, green (except for the highly oxidized UVA green, for which the BRN ranges from +5 to +15), flint reduced ones can be molten in a multi-furnace with one common firing space.

In case of multi-tank furnaces melting glass from batches of different BRN it is essential to provide them with additional energy sources allowing difference's compensation in radiative thermal conductivity, which determine the mechanisms of heat transfer from the melt surface towards the tank bottom - Table 2. Where the thermal conductivity values are low, as in the case of amber, olive and green glasses (approx. 10 - 22 W/(m·K) at 1500°C), electric boosting systems are installed in the batch heating and melting zones, preferably in form of integrated electrodes-bubbling nozzles systems.

**Table 2: Thermal conductivities [in W/(m·K)] of flint, amber and green glasses as a function of temperature.**

| | Flint oxidized | Flint reduced | Emerald green | HT green | Olive | Amber |
|---|---|---|---|---|---|---|
| 1250 | 97.11 | 64.40 | 14.08 | 11.00 | 7.30 | 9.50 |
| 1300 | 106.88 | 70.85 | 15.40 | 12.01 | 7.93 | 10.36 |
| 1350 | 117.30 | 77.71 | 16.81 | 13.08 | 8.60 | 11.27 |
| 1400 | 128.37 | 85.01 | 18.31 | 14.23 | 9.32 | 12.24 |
| 1450 | 140.13 | 92.77 | 19.90 | 15.44 | 10.08 | 13.27 |
| 1500 | 152.59 | 100.98 | 21.59 | 16.73 | 10.89 | 14.37 |
| 1550 | 165.77 | 109.67 | 23.37 | 18.09 | 11.74 | 15.52 |

Low thermal conductivity of amber, olive and green glasses results from high concentrations of iron in reduced form (Fe²⁺) and chromium in reduced form (Cr³⁺). Both equilibriums are established not as a result of mutual direct reactions of iron and chromium in the glass melt, but through their interaction with oxygen, and thus depend on pO₂. The simultaneous melting of several glasses in a multi-tank furnace is possible due the fact that the pO₂ value is essentially determined by the BRN, rather than by the oxygen content in the flue gases above the melt, which is a consequence of the set firing conditions. In order to maintain the Fe²⁺ and Cr³⁺ concentrations within the ranges that are required to obtain a stable color (amber, olive or green of a specific hue), the multi-tank furnace is equipped with lambda probes installed in the crowns of the regeneration chambers, or more preferably with laser systems for continuous measurement of CO and/or O₂ concentration in the burner ports. In cases where amber or olive glass is molten in one of the tanks, the O₂ concentration in the flue gases is kept below 1%, preferably 0.5%, and most preferably 0.3%.

The thermal conductivity coefficient of the glass is also always taken into account when designing the tank depth change profile. In order to increase the flexibility of a multi-tank furnace understood as suitability for melting almost the full range of glass types: from reduced flint, through green and olive to amber, its tanks as a rule have a depth of not less than 1.2 m, preferably 1.4 m in the melting zone and 1.6 m, preferably 1.8 m in the refining zone (for furnaces with variable bottom geometry) and 1.3 m, preferably 1.4 m for flat-bottom furnaces. These depths are recommended if an electric boost with electrical power corresponding to at least 10%, more preferably 15%, and most preferably 25% of the total melting energy demand for maximum glass pull is installed in these tanks in the melting zone.

In addition to electrical boost in melting zones, barrier boost is also installed in all tanks to create the conditions for harmonizing the course of fining processes, so that the glass flowing to the highest temperature zone - located, due to the use of a common superstructure, identically in all tanks - was free of relics of unmolten grains of the batch and had a similar temperature distribution in the stream cross-section. In this tank, where the melting process is more difficult due to a higher content of iron in reduced form (Fe²⁺) and/or chromium in reduced form (Cr³⁺), or a lower alkali content (understood as the sum of Na₂O + K₂O) - below 13.8%, or a lower proportion of cullet in the batch - below 30%, the share of Joule energy generated and delivered directly to the glass melt from electric boost is higher compared to adj acent tanks, where glasses with a higher radiative thermal conductivity are molten. The case, in which glass is molten in one tank using up to 25% of the energy from electric boost, while in the other all the energy is obtained only from the combustion of gas over the batch and glass, is also an embodiment of the present invention.

The location of the barrier boost line is at 0.6 - 0.85 of the tank length, preferably at 0.75 - 0.80 of the tank length, calculated from its rear wall in the flow direction. The barrier boost is arranged by at least 3 electrodes, preferably 6 or more electrodes, and most preferably integrated electrodes-bubbling nozzles. Although the barrier boost installation is the most advantageous technical solution to support the harmonization of the refining processes in both tanks, instead of them a bubbling system consisting of nozzles enabling the supply of air or other gas at a rate of 0.5 - 2 dm³/min can be installed. The nozzles are arranged along the line at approximately equal intervals less than 1 m, preferably less than 0.75 m, and most preferably at intervals of 0.55 - 0.65 m.

Electric boost or barrier bubbling systems are mounted in flat bottom tanks and in tanks with variable bottom geometry. In tanks with variable bottom geometry, an increase in depth is used in the refining part, i.e. starting from 0.7 - 0.85 of the tank length, calculated from the rear wall and is maintained up to the throat.

A weir wall or a ceramic threshold may be constructed at the depth change line. The weir wall height should be such that there is a space above it for the free flow of glass with a height of not less than 300 mm, preferably 400, most preferably at least 500 mm.

Due to the extremely difficult operating conditions resulting from the corrosive and erosive effects of molten glass on both sides, as well as flame and flue gases having temperatures up to 1600°C, the common wall of adjacent tanks is preferably made of refractory materials based on oxides: Cr₂O₃ - Al₂O₃ - ZrO₂, preferably containing at least 30% Cr₂O₃, and most preferably containing above 90% Cr₂O₃. Walls made of such materials can be used as compact structures without cooling, however, in order to maintain the symmetry of transverse currents in the tank, as well as to reduce the corrosion rate, it is advantageous to use air cooling, a system of coolers or a mixed one. Due to the not always acceptable contamination of chromium in the glass, which mainly applies to flint glasses, in multi-tank furnaces, where such glasses are planned to be molten, the common wall is made of AZS type materials, which is protected against corrosion by a respective system of coolers installed at one or both outer surfaces of the wall or inside it. An air blowing installation placed inside can also be used to cool the wall. The cooling air flow rate is not less than 0.75 m³/(s·lm of the wall), preferably 1.25 m³/(s·lm of the wall), and most preferably 2.00 m³/(s· lm of the wall).

A special embodiment of the wall separating the tank into two or more independently working parts are walls of frozen glass formed temporarily or permanently as a result of the flow of cooling liquid through a system of finger coolers made of boiler steel mounted in one or several lines of temporary separation of the tank. Coolers mounted in the furnace bottom are equipped with additional safety coolers located directly under the furnace bottom. Safety coolers are also used when ascending and lowering finger coolers depending on the periodic need to form a frozen glass wall in the tank. In the ascended position, the finger coolers are located not less than 20 cm, preferably 10 cm, most preferably 5 cm from the molten glass surface (in the fining and refining zone) and not more than 20 cm, preferably 10 cm below the bottom surface of the batch or foam in the melting zone. In a lowered position, the finger coolers are at a level of the top surface of the bottom or protrude up to 10 cm above this surface.

As a fuel burned in the furnace combustion chamber, natural gas or oil can be used, burned either in pure oxygen or in oxygen from air. The multi-tank furnace of the present invention can also cooperate with any flue gas heat recovery system, for example for heating the batch, generating steam or generating electricity. The multi-tank furnace of the present invention may also be equipped with a flue gas cleaning system for removing dust and SOₓ and/or NOₓ.

### Brief description of figures of drawing

The invention in preferred embodiments has been illustrated based on a drawing, in which:
Fig. 1 is a top view of a regenerative two-tank cross-fired furnace according to a first embodiment of the invention;
Fig. 2 is a top view of a regenerative two-tank U-flame furnace according to a second embodiment of the invention;
Fig. 3 is a top view of a regenerative two-tank double-U-flame according to a third embodiment of the invention;
Fig. 4 is a top view of an oxy-fuel two-tank furnace according to a fourth embodiment of the invention;
Fig. 5 is a top view of a regenerative three-tank cross-fired furnace according to a fifth embodiment of the invention;
Fig. 6 is a cross-sectional top view and below a longitudinal side cross-section of the wall separating the melting tanks in the furnace of the invention, whereby the wall has finger coolers located on one side in all joints of refractory blocks;
Fig. 7 is a cross-sectional top view and below a longitudinal side cross-sectional view of a finger cooler for cooling the inner wall of a multi-tank furnace according to the invention.

### Exemplary embodiments:

The concept of a furnace with many melting tanks and one firing zone can be realized in many design options that optimally solve specific needs or production or spatial problems of an individual glass manufacturer.

### Example 1: two-tank regenerative cross-fired furnace fired with natural gas-air mixture with electric boost in melting parts and barrier boost in fining/refining zones transfer.

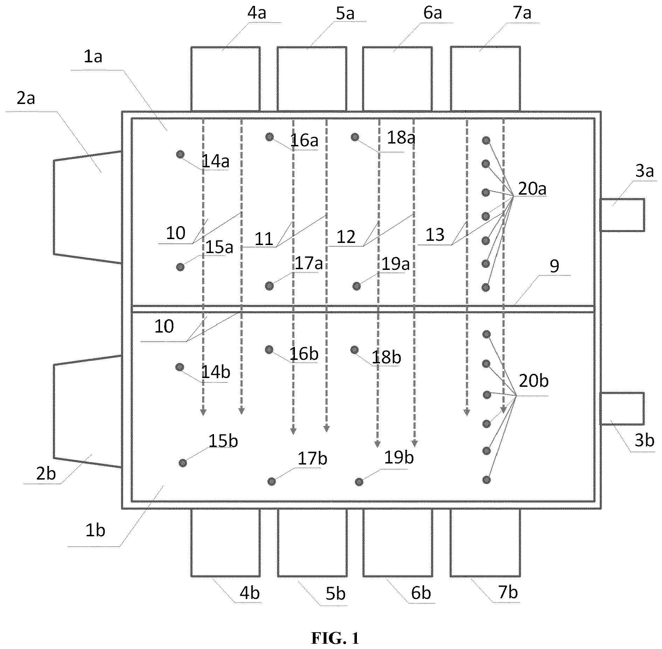

In order to obtain greater possibilities to control temperature profiles along and across the furnace in the case of newly built multi-tank furnaces with a total melting area equal to or greater than 150 m², in particular in cases where the number of tanks is 3 or more, which enforces the doghouses being installed at the rear wall of the tank, the preferred design is a regenerative cross-flame furnace with regenerators arranged along the longer outer walls of the tanks as shown in Fig. 1, in which the references have the following meaning: 1a and 1b - melting tanks, 2a and 2b - batch chargers, 3a and 3b - throats, 4a - 7a and 4b - 7b - burner ports, 9 - common separating wall, 10-13 - flame directions, 14a - 19a and 14b - 19b - electrode boost systems in melting zones, 20a and 20b - electrode boost systems in fining/refining zones transfer. The furnace having a total area of 166.75 m², where each of the two tanks has a length of 14.5 m and a width of 7.75 m allows melting two different glasses for the production of packaging in the amount of 470 to 665 tons per day (2 x 235 - 332.5 tpd) assuming specific pull from 2.8 to 4 tpd/m² of the area. The upper pull limit for each of the tanks is obtained by means of an electric boost consisting of 6 electrodes - items 14a-19a and 14b-19b in Fig. 1. The installed capacity is 1.2 MW for each tank. Additionally, 6 electrodes in form of a barrier boost were installed in each tank - positions 20a and 20b in Fig. 1. The installed capacity is 1.0 MW for each tank. In case this furnace design is dedicated to melting only two types of flint glasses, one of them being so-called eco-flint produced from a batch consisting in 60-80% of recycled cullet, or glasses differing in chemical composition in order to obtain the required difference in parameters such as: cooling time (CT), relative machine speed (RMS) or upper crystallization temperature, the furnace can be equipped with two flat-bottom tanks and then their depth is 1.5 m, or it can comprise two tanks of variable depth: 1.4 m in zones up to the barrier boost line + 0.75 m and 2.0 m in refining zones, i.e. from the barrier boost line + 0.75 m up to the throats. In case of a furnace dedicated to the production of two types of flint glass, the wall separating the melting tank - item 9 in Fig. 1, is made of AZS blocks 41 with a thickness of 2 x 300 mm, air-cooled at a flow rate of 2 x 1.5 m³/(s·lm of the wall). If this furnace design is dedicated to melting 2 types of colored glass, from green through olive to amber, the furnace can be equipped with two flat-bottom tanks and then their depth is 1.3 m, or it can comprise two tanks of variable depth: 1.25 m in zones up to the barrier boost line + 0.75 m and 1.8 m in the refining zones, i.e. from the barrier boost line +0.75 m up to throats. In case of a furnace dedicated to the production of two types of colored glass, the wall separating the melting tank is made of blocks of CAZ materials (Cr₂O₃ - Al₂O₃ - ZrO₂) containing 91% Cr₂O₃ with a thickness of 300 mm and to reduce the corrosion rate and to force the symmetrization of lateral convection currents, the cooling system in form of a system of coolers is employed. It is also possible to design a furnace using standard molybdenum electrodes with no bubbling function.

### Example 2: two-tank regenerative U-flame furnace fired with natural gas-air mixture with electric boost in the melting parts and barrier boost in the fining/refining zones transfer.

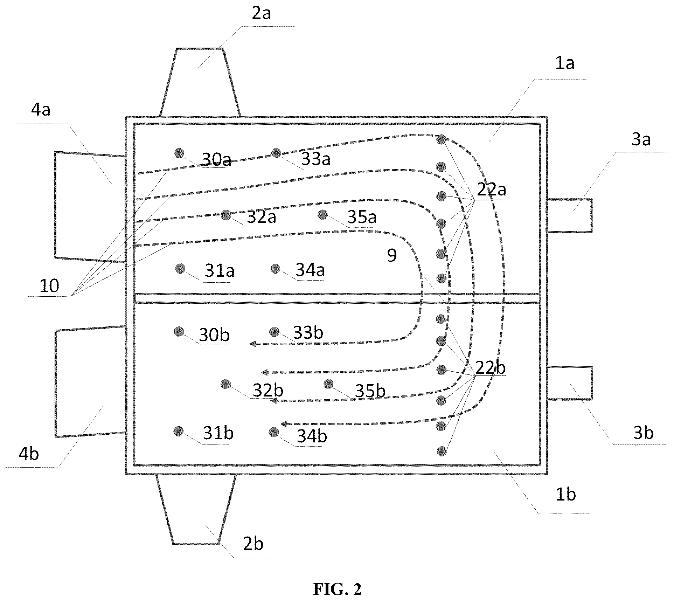

In the case of newly built two-tank furnaces with a total melting area equal to or less than 130 m² and modernizing existing facilities having a similar melting surface consisting of replacing one melting tank with two, the preferred design is the regenerative U-flame furnace shown in Fig. 2, where the references have the following meaning: 1a and 1b - melting tanks, 2a and 2b - batch chargers, 3a and 3b - throats, 4a and 4b - burner ports, 9 - common separation wall, 10 - flame directions, 22a and 22b - systems of integrated electrodes-bubbling nozzles in fining/refining zone transfers, 30a - 35a and 30b - 35b - systems of integrated electrodes-bubbling nozzles in melting zones. The furnace having a total area of 127.5 m², where each of the two tanks is 5.2 m wide and 12.5 m long, allows melting two different container glasses in the amount of 320 to 510 tons per day (2 x 160 - 255 tpd ) assuming specific pull from 2.5 to 4 tpd/m² of the area. The upper pull limit for each of the tanks is obtained by means of an electric boost consisting of 9 integrated electrodes-bubbling nozzles. The installed power is 900 kW for each tank. Additionally, 6 integrated electrodes-bubbling nozzles in form of a barrier boost were installed in each of the tanks. The installed power in this case is 400 kW for each tank. In case of dedicating this furnace design to melting only two types of flint glasses, one of them being so-called eco-flint produced from a batch consisting in 60-80% of recycled cullet, or glasses differing in chemical composition in order to obtain the required difference in parameters such as: cooling time (CT), relative machine speed (RMS) or upper crystallization temperature, the furnace can be equipped with two flat-bottom tanks and then then their depth is 1.5 m, or it can comprise two tanks of variable depth: 1.4 m in zones up to the barrier boost line + 0.65 m and 2.0 m in refining zones, i.e. from the barrier boost line + 0.65 m up to the throats. In case of a furnace dedicated to the production of two types of flint glass, the wall separating the melting tank is made of AZS blocks 41 with a thickness of 2 x 300 mm, air-cooled with a flow rate of 2 x 1.75 m³/(s·lm of the wall). If this furnace design is dedicated to melting 2 types of colored glass, from green to amber, the furnace can be equipped with two flat bottom tanks and then then their depth is 1.3 m, or it can comprise two tanks of variable depth: 1.25 m in zones up to the barrier boost line + 0.65 m and 1.8 m in the refining zones, i.e. from the barrier boost line + 0.65 m up to throats. In case of a furnace dedicated to the production of two types of colored glass, the wall separating the melting tank is made of blocks of CAZ materials (Cr₂O₃ - Al₂O₃ - ZrO₂) containing 91% Cr₂O₃ with a thickness of 300 mm and to reduce the corrosion rate and to force the symmetry of lateral convection currents, the cooling system in form of a system of coolers is employed. It is also possible to design a furnace using standard molybdenum electrodes with no bubbling function.

### Example 3: two-tank double U-flame regenerative furnace, fired with natural gas-air mixture with electric boost in melting parts and barrier boost in fining/refining zones transfer.

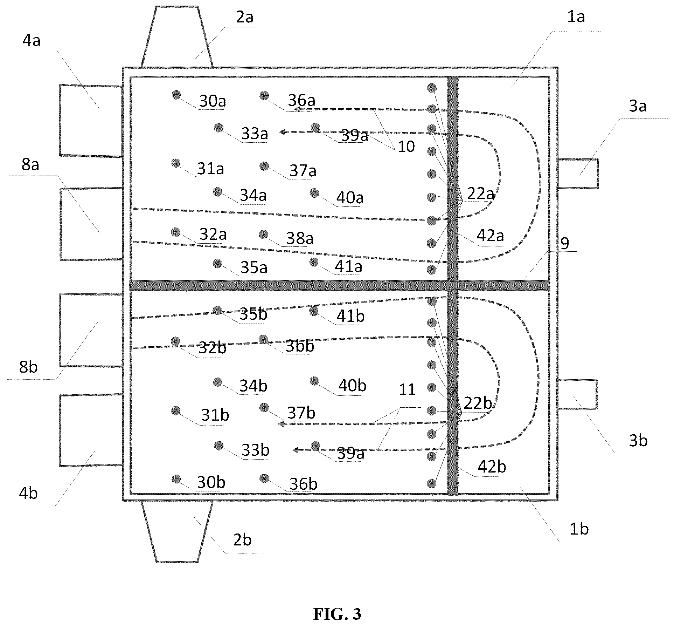

Fig. 3 shows an innovative development of the concept of a two-tank furnace with a single superstructure - a double U-flame furnace equipped with doubled burner ports. In Fig. 3 the references have the following meaning: 1a and 1b - melting tanks, 2a and 2b - batch chargers, 3a and 3b - throats, 4a and 8a as well as 4b and 8b - burner ports, 9 - common separation wall, 10 and 11 - flame directions, 22a and 22b - systems of integrated electrodes-bubbling nozzles in form of barriers in front of baffle walls, 30a - 41a and 30b - 41b - systems of integrated electrodes-bubbling nozzles in the melting zones, 42a and 42b - ceramic weir walls. In order to force the flow of flue gases mostly over one tank, the directions of flame and flue gases movement over the adjacent tanks are opposite, where in one reversal cycle the internal burners located closer to the wall separating the melting tanks burn, while the flue gases are received by the external ports as shown in fig. 3. In the next reversal cycle, the external burners burn and the flue gases are received by the internal ports located closer to the wall separating the melting tanks. In other words, in a given reversal cycle, internal burner ports (8a, 8b) of both tanks perform one of the functions: feeding combustion air or extracting flue gases, and the external burner ports (4a, 4b) of both tanks perform the other of these functions in the same reversal cycle, while in the next reversal cycle the functions of the internal burner ports (8a, 8b) and the external burner ports (4a, 4b) are reversed. The furnace shown in Fig. 3 with a total area of 189 m², where each of the two tanks has a width of 6.8 m and a length of 13.9 m, allows melting two different container glasses in the amount of 472 to 756 tons per day (2 x 236 - 378 tpd) assuming specific pull from 2.5 to 4 tpd/m² of the area. The upper pull limit for each of the tanks is obtained by means of an electric boost consisting of 12 integrated electrodes-bubbling nozzles. The installed power is 2.4 MW for each tank. Additionally, 12 integrated electrodes-bubbling nozzles in form of barrier boost were installed in each tank. The installed power in this case is 1.2 MW for each tank. The integrated electrodes-bubbling nozzles (IE-BN) configuration in the melting zones of both tanks allows to use them as dispersed bubbling supporting the processes of mixing molten glass with the batch. This favors its faster heating and intensifying of sand reaction with soda and limestone (and dolomite in batches with dolomite). Additional bubbling is started in the IE-BN lines installed in front of the weir wall. Its role is to support the refining process and to stop the return flow of glass melt containing relics of unmolten raw materials' grains beyond the refining zone. These solutions make it possible to obtain high-quality glass even when using batches containing less than 50% cullet. The furnace is dedicated to the mass production of 2 types of colored glasses, from green to amber. For this purpose, both of its tanks have a variable depth: 1.25 m in zones up to the weir wall located in 0.8 of the tank length and 1.8 m in refining parts behind the weir wall up to the throats. The wall separating the melting tank is made of blocks of CAZ materials (Cr₂O₃ - Al₂O₃ - ZrO₂) containing 91% Cr₂O₃, 400 mm thick, with no air cooling. The clearance above the wall for the free flow of glass is 550 mm.

### Example 4: two-tank furnace fired with natural gas-oxygen mixture with bubbling

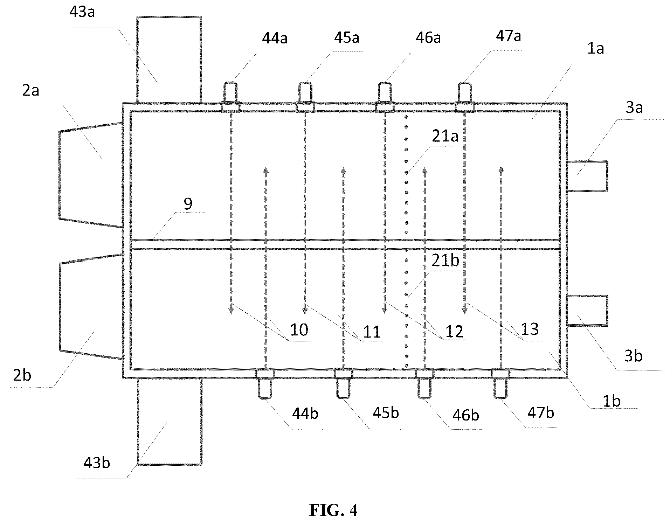

Fig. 4 is a schematic diagram of a two-tank furnace fired with a natural gas-oxygen mixture. In Fig. 4, the references have the following meaning: 1a and 1b - melting tanks, 2a and 2b - batch chargers, 3a and 3b - throats, 9 - common separation wall, 10 - 13 - flame directions, 21a and 21b - bubbling lines, 43a and 43b - flue gases extractors, 44a - 47a and 44b - 47b - gas-oxygen burners. The furnace having a total area of 121.8 m², where each of the two tanks has a width of 4.2 m and a length of 14.5 m, allows melting two different container glasses in the amount of 305 to 426 tons per day (2 x 152.5 - 213 tpd) assuming specific pull from 2.5 to 3.5 tpd/m² of the area. Due to better direct transmission of heat from the flame to the batch and glass in oxy-fuel furnaces, electric boost was abandoned in this case. To assist the refining process, 12 bubbling nozzles were installed in each tank in form of a bubbling line at 0.6 of the tank length. The furnace is provided with a flat bottom. The furnace is intended for melting colored glasses. The depth of the tanks is 1.3 m. The wall separating the melting tank is made of blocks of CAZ materials (Cr₂O₃ - Al₂O₃ - ZrO₂) containing 91% Cr₂O₃ with a thickness of 300 mm with no air cooling.

### Example 5: three-tank regenerative cross-fired furnace using natural gas-air mixture with electric boost in melting parts and barrier boost in fining/refining zones transfer.

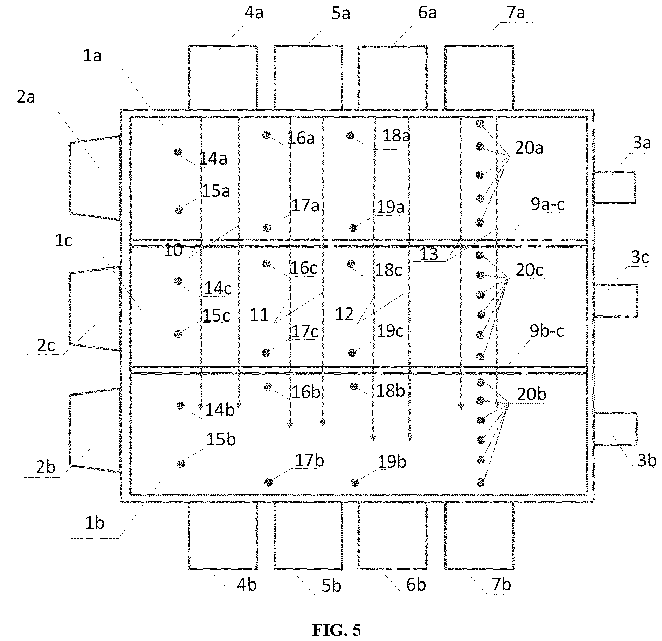

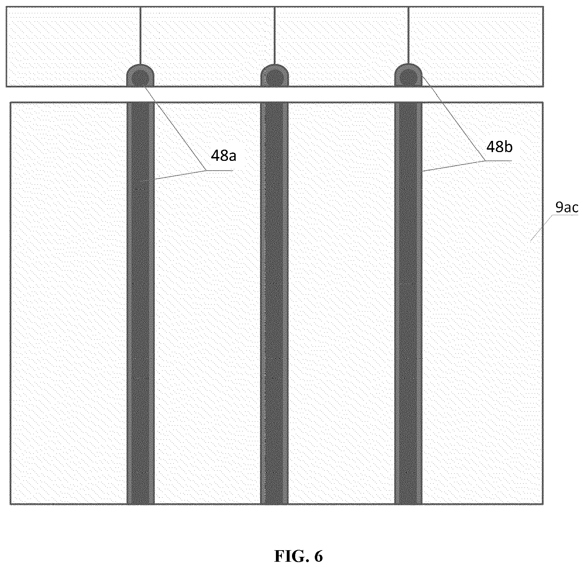

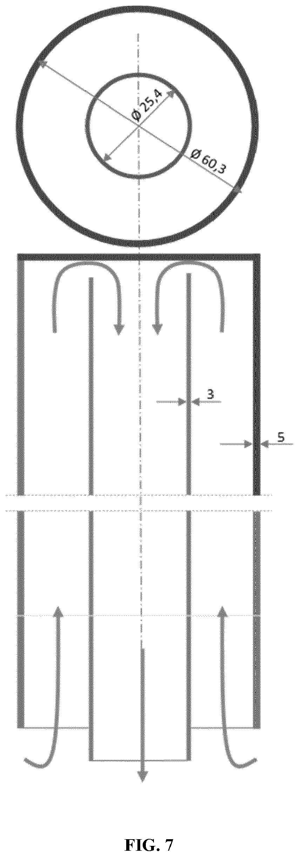

Fig. 5 shows a three-tank furnace for melting three types of flint glass that are used to form three different types of products. In Fig. 5 the references have the following meaning: 1a, 1b, 1c - melting tanks, 2a, 2b and 2c - batch chargers, 3a, 3b and 3c - throats, 4a - 7a and 4b - 7b - burner ports, 9a-c and 9b-c - common separating walls for pairs of tanks - 1a and 1c, and 1b and 1c, respectively, 10 - 13 - flame directions, 14a - 19a, 14b - 19b and 14c - 19c - electrode boost systems in the melting zones, 20a, 20b, 20c - electrode boost systems in the refining zones. In the tank 1a (external), glass no. 1 (data in Table 3 below) is molten, said glass having standard parameters used for glass containers of volumes from 250 to 500 ml; in the tank 1c (middle), glass no. 2 is molten, said glass being of hydrolytic class III and used for glass containers for cosmetics with a volume of 10 to 100 ml; in the tank 1b (external) glass no. 3 is molten, said glass being made from an economical raw material batch (with low proportions of feldspar and dolomite) and used for forming lower price segment of glass containers of reduced concentrations of Al₂O₃ and MgO. These three glasses are melted simultaneously in a cross-fired regenerative three-tank furnace with a total area of 165.3 m², where each tank is 14.5 m long and 3.8 m wide. The total capacity of the furnace is from 435 to 498 tons per day (3 x 145 - 166 tpd) assuming specific pull from 2.2 to 3 tpd/m² of the melting area. The upper pull limit for each of the tanks is obtained by means of an electric boost consisting of 6 electrodes - items 14a-19a, 14a-19b and 14c-19c in Fig. 5. The installed power is 0.6 MW for each tank. Additionally, 6 electrodes in form of a barrier boost were installed in each tank - items 20a, 20b and 20c in Fig. 5. The installed power in this case is 0.4 MW for each tank. All three tanks have a variable depth: 1.4 m in zones up to the barrier boost reheating line + 0.75 m and 2.0 m in the refining zones, i.e. from the barrier boost line + 0.75 m up to the throats. Walls separating melting tanks - items 9ac and 9bc in Fig. 5, are made of blocks of refractory materials containing at least 91% Cr₂O₃, 300 mm thick, and are provided with a system of finger coolers located in special niches made in the joint creating edges of refractory blocks - Fig. 6. Coolers can be placed on one or two sides of the wall, in all joints of blocks, or alternately, once on one side and once on the other side of the wall, or only in selected joints on the selected side of the wall, depending on the purpose they are to meet. In a three-tank furnace, it is most advantageous to place these coolers at the inner sides of the walls of the middle tank, in which glass with the highest requirements for colorlessness is melted. Such one-sided cooling of the walls separating the tanks realizes three functions at the same time: it reduces, basically to zero, the chromium contamination of the glass molten in the middle tank, triggers lateral convective currents in the middle tank and brings symmetrization to the side currents in the external tanks. Finger coolers are installed in the common dividing walls 9a-c and 9b-c as shown in Figure 7. They are made in form of two coaxially arranged pipes made of boiler steel. Water from the closed cooling circuit is supplied to the external ducts and drained through the central duct. For the furnace of example 5, the water flow rate is approx. 50 l/min per cooler. This amount of water allows a layer of frozen glass about 20 mm thick to be formed on the inner wall surface.

**Table 3: The composition of glasses molten in the three-tank furnace of example 5**

| Parameter | Unit | Tank 1a | Tank 1b | Tank 1c |
|---|---|---|---|---|
| SiO₂ | [wt.%] | 72.35 | 71.22 | 72.84 |
| Al₂O₃ | [wt.%] | 1.52 | 2.44 | 0.99 |
| Na₂O | [wt.%] | 13.36 | 12.80 | 13.65 |
| K₂O | [wt.%] | 0.36 | 0.71 | 0.17 |
| CaO | [wt.%] | 1.60 | 3.50 | 1.10 |
| MgO | [wt.%] | 10.44 | 9.00 | 10.91 |
| Fe₂O₃ | [wt.%] | 0.04 | 0.04 | 0.04 |
| TiO₂ | [wt.%] | 0.08 | 0.08 | 0.08 |
| SO₃ | [wt.%] | 0.20 | 0.20 | 0.20 |
| T (lgη=3) | [°C] | 1 191 | 1 213 | 1 181 |
| T (lgη=7,65) LP | [°C] | 732 | 740 | 728 |
| T (lgη=13,4) AP | [°C] | 549 | 550 | 548 |
| WRI | [°C] | 183 | 190 | 180 |
| RMS | [%] | 108,6 | 108,8 | 108,1 |
| CT | [s] | 98,8 | 98,7 | 98,9 |
| T_{liq} | [°C] | 1 050 | 1 056 | 1 045 |

## Claims

1. A furnace for simultaneous continuous melting of two or more different glasses, said furnace having one common combustion chamber constituting one common firing system and two or more melting tanks having at least one common wall separating adjacent tanks, whereby each melting tank is intended for melting glass having a color or chemical composition different from the color or chemical composition of glass in the adjacent tank(s) in such a way that at no stage of the process and in no area of the furnace these glasses connect with each other and flow through a common part of the furnace, where a height of the common wall separating adjacent tanks is greater than the filling level of each of the adjacent tanks measured each time from the bottom of the tank to the surface of glass being molten in this tank and each of these tanks is provided with its own doghouse for feeding a batch of raw materials suitable for the glass molten in this tank and its own throat, through which the glass molten in this tank is directed to a distributor and a system of feeders, from which it is fed to product forming devices, **characterised in that** at least one wall separating adjacent tanks is equipped with coolers located in niches made in the edges of blocks.

2. The furnace according to claim 1, **characterized in that** the depth of the melting tanks is constant.

3. The furnace according to claim 1, **characterized in that** the depth of the melting tanks is variable.

4. The furnace according to claim 3, **characterized in that** ceramic weir walls or ceramic thresholds and/or barriers of line of electrodes and/or barriers of lines of bubbling nozzles and/or barriers of lines of integrated electrode-bubbling nozzles or combinations thereof are installed at the place of changing the depth of the tanks.

5. The furnace according to one of claims 1-4, **characterized in that** electrode systems or bubbling nozzle systems, or integrated electrode-bubbling nozzle systems, or combinations thereof, are installed in melting parts of the tanks.

6. The furnace according to one of claims 1-5, **characterized in that** it has two adjacent melting tanks.

7. The furnace according to claim 6, **characterized in that** one common firing system for supplying heat for melting glass in both tanks is a U-flame regenerative system, with two burner ports mounted in a rear wall of the furnace, one above each tank.

8. The furnace according to claim 6, **characterized in that** one common firing system for supplying heat for melting glass in both tanks is a double U-flame regenerative system, with four burner ports mounted in a rear wall of the furnace, two above each tank.

9. The furnace according to claim 8, **characterized in that** the double U-flame regenerative firing system cooperates synchronously with one reversal system.

10. The furnace according to claim 9, **characterized in that** internal burner ports (8a, 8b) of both tanks are intended to perform in a given reverse cycle one of the functions: combustion air feeding or flue gas extraction, while external burner ports (4a, 4b) of both tanks in the same reverse cycle are intended to perform the other one of these functions.

11. The furnace according to one of claims 1-6, **characterized in that** one common firing system for supplying heat for melting glass in both tanks is a cross-fired regenerative system using burners mounted in the furnace side walls.

12. The furnace according to one of claims 1-6, **characterized in that** one common firing system for supplying heat for melting the glasses in both tanks comprises gas-oxygen mixture burners mounted in the furnace side walls.

13. The furnace according to one of claims 1-12, **characterized in that** the throat in each of the tanks is mounted centrally or offset from the tank axis in a rear wall or a side wall, regardless of the arrangement used in the other tank(s).

## Patentansprüche

1. Ein Ofen zum gleichzeitigen kontinuierlichen Schmelzen von zwei oder mehr unterschiedlichen Gläsern, wobei der Ofen eine gemeinsame Brennkammer aufweist, die ein gemeinsames Befeuerungssystem bildet, und zwei oder mehr Schmelzwannen mit mindestens einer gemeinsamen Wand, die benachbarte Wannen trennt, wobei jede wobei jede Schmelzwanne für das Schmelzen von Glas mit einer Farbe oder chemischen Zusammensetzung bestimmt ist, die sich von der Farbe oder chemischen Zusammensetzung des Glases in der/den benachbarten Wanne(n) unterscheidet, in der Weise, dass diese Gläser in keinem Stadium des Prozesses und in keinem Bereich des Ofens miteinander verbunden sind und durch einen gemeinsamen Teil des Ofens fließen, wobei eine Höhe der gemeinsamen Wand, die benachbarte Wannen trennt, größer ist als der Füllstand jeder der benachbarten Wannen, gemessen jeweils vom Boden der Wanne bis zur Oberfläche des in dieser Wanne geschmolzenen Glases, und jede dieser Wannen mit einem eigenen Doghouse zur Zuführung eines für das in dieser Wanne geschmolzene Glas geeigneten Gemenges von Rohstoffen und einer eigenen Kehle versehen ist, durch den die Glasschmelze in dieser Wanne zu einem Verteiler und einem System von Speisern geleitet wird, von denen aus sie den Produktformungsvorrichtungen zugeführt wird, **dadurch gekennzeichnet, dass** mindestens eine Wand, die benachbarte Wannen trennt, mit Kühlern ausgestattet ist, die sich in Nischen befinden, die in den Rändern der Blöcke ausgebildet sind.

2. Der Ofen nach Anspruch 1, **dadurch gekennzeichnet, dass** die Tiefe der Schmelzwannen konstant ist.

3. Der Ofen nach Anspruch 1, **dadurch gekennzeichnet, dass** die Tiefe der Schmelzwannen variabel ist.

4. Der Ofen nach Anspruch 3, **dadurch gekennzeichnet, dass** keramische Wehrwände oder keramische Schwellen und/oder Barrieren von Elektrodenreihen und/oder Barrieren von Reihen von Sprudeldüsen und/oder Barrieren von Reihen von integrierten Elektroden-Sprudeldüsen oder Kombinationen davon an der Stelle der Änderung der Tiefe der Wannen installiert sind.

5. Der Ofen nach einem der Ansprüche 1-4, **dadurch gekennzeichnet, dass** Elektrodensysteme oder Einperldüsensysteme oder integrierte Elektroden-Einperldüsensysteme oder Kombinationen davon in Schmelzteile der Wannen eingebaut sind.

6. Der Ofen nach einem der Ansprüche 1-5, **dadurch gekennzeichnet, dass** er zwei benachbarte Schmelzwannen aufweist.

7. Der Ofen nach Anspruch 6, **dadurch gekennzeichnet, dass** ein gemeinsames Befeuerungssystem zum Zuführen von Wärme zum Schmelzen von Glas in beiden Wannen ein U-Flammen-Regenerationssystem ist, mit zwei Brenneröffnungen, die in einer Rückwand des Ofens angebracht sind, einer über jede Wanne.

8. Der Ofen nach Anspruch 6, **dadurch gekennzeichnet, dass** ein gemeinsames Feuerungssystem zum Zuführen von Wärme zum Schmelzen von Glas in beiden Wannen ein Doppel-U-Flammen-Regenerationssystem ist, mit vier Brenneröffnungen, die in einer Rückwand des Ofens angebracht sind, zwei darüber jede Wanne.

9. Der Ofen nach Anspruch 8, **dadurch gekennzeichnet, dass** das Doppel-U-Flammen-Regenerationsfeuerungssystem synchron mit einem Umkehrsystem zusammenwirkt.

10. Der Ofen nach Anspruch 9, **dadurch gekennzeichnet, dass** innere Brenneröffnungen (8a, 8b) beider Wannen dazu bestimmt sind, in einem bestimmten Umkehrzyklus eine der Funktionen zu erfüllen: Verbrennungsluftzufuhr oder Rauchgasabsaugung, während äußere Brenneröffnungen (4a, 4b) beider Wannen in demselben Umkehrzyklus sollen die andere dieser Funktionen erfüllen.

11. Der Ofen nach einem der Ansprüche 1-6, **dadurch gekennzeichnet, dass** ein gemeinsames Befeuerungssystem zum Zuführen von Wärme zum Schmelzen von Glas in beiden Wannen ein querbefeuertes regeneratives System ist, das Brenner verwendet, die in den Ofenseitenwänden angebracht sind.

12. Der Ofen nach einem der Ansprüche 1-6, **dadurch gekennzeichnet, dass** ein gemeinsames Befeuerungssystem zum Zuführen von Wärme zum Schmelzen der Gläser in beiden Wannen Gas-Sauerstoff-Gemischbrenner umfasst, die in den Ofenseitenwänden angebracht sind.

13. Der Ofen nach einem der Ansprüche 1-12, **dadurch gekennzeichnet, dass** die dass die Kehle in jeder der Wannen mittig oder versetzt zur Wannenachse in einer Rückwand oder einer Seitenwand angebracht ist, unabhängig von der in der/den anderen Wanne(n) verwendeten Anordnung.

## Revendications

1. Un four pour la fusion continue simultanée de deux ou plusieurs verres différents, ce four ayant une chambre de combustion commune constituant un système de cuisson commun et deux ou plusieurs cuves de fusion ayant au moins une paroi commune séparant des cuves adjacentes, où chaque cuve de fusion est destinée à la fusion de verre ayant une couleur ou une composition chimique différente de la couleur ou de la composition chimique du verre dans la (les) cuve(s) adjacente(s) de telle sorte qu'à aucun stade du processus et dans aucune zone du four ces verres ne se connectent l'un à l'autre et ne s'écoulent à travers une partie commune du four, où la hauteur de la paroi commune séparant les cuves adjacentes est supérieure au niveau de remplissage de chacune des cuves adjacentes, mesuré à chaque fois depuis le fond de la cuve jusqu'à la surface du verre en cours de fusion dans cette cuve, et où chacune de ces cuves est pourvue de sa propre niche pour l'alimentation d'un lot de matières premières adaptées au verre en fusion dans cette cuve et de sa propre gorge, par laquelle le verre en fusion dans cette cuve est dirigé vers un distributeur et un système d'alimentation, à partir desquels il est acheminé vers des dispositifs de formation des produits, **caractérisé en ce qu'**au moins une paroi séparant des cuves adjacentes est équipée de refroidisseurs situés dans des niches pratiquées dans les bords des blocs.

2. Le four selon la revendication 1, **caractérisé en ce que** la profondeur des cuves de fusion est constante.

3. Le four selon la revendication 1, **caractérisé en ce que** la profondeur des cuves de fusion est variable.

4. Le four selon la revendication 3, **caractérisé en ce que** des parois déversoirs en céramique ou des seuils en céramique et/ou des barrières de ligne d'électrodes et/ou des barrières de lignes de buses de barbotage et/ou des barrières de lignes de buses de barbotage à électrodes intégrées ou leurs combinaisons sont installés à l'endroit de la modification de la profondeur des réservoirs.

5. Le four selon l'une des revendications 1 à 4, **caractérisé en ce que** des systèmes d'électrodes ou des systèmes de buse de barbotage, ou des systèmes de buses de barbotage à électrodes intégrées, ou des combinaisons de ceux-ci, sont installés dans les parties de fusion des cuves.

6. Le four selon l'une des revendications 1 à 5, **caractérisé en ce qu'**il comporte deux cuves de fusion adjacentes.

7. Le four selon la revendication 6, **caractérisé en ce qu'**un système d'allumage commun pour fournir de la chaleur pour la fusion du verre dans les deux cuves est un système de régénération à flamme en U, avec deux orifices de brûleur montés dans une paroi arrière du four, un au-dessus de chaque cuve.

8. Le four selon la revendication 6, **caractérisé en ce qu'**un système de chauffe commun pour fournir de la chaleur pour la fusion du verre dans les deux cuves est un système régénérateur à double flamme en U, avec quatre orifices de brûleur montés dans une paroi arrière du four, deux au-dessus de chacque cuve.

9. Le four selon la revendication 8, **caractérisé en ce que** le système de cuisson régénérative à double flamme en U coopère de manière synchrone avec un système d'inversion.

10. Le four selon la revendication 9, **caractérisé en ce que** les orifices des brûleurs internes (8a, 8b) des deux cuves sont destinés à assurer, dans un cycle inversé donné, l'une des fonctions suivantes: alimentation en air de combustion ou extraction des gaz de combustion, tandis que les orifices des brûleurs externes (4a, 4b) des deux cuves, dans le même cycle inversé, sont destinés à assurer l'autre de ces fonctions.

11. Le four selon l'une des revendications 1 à 6, **caractérisé en ce qu'**un système de combustion commun pour fournir la chaleur nécessaire à la fusion du verre dans les deux cuves est un système régénératif à combustion croisée utilisant des brûleurs montés sur les parois latérales du four.

12. Le four selon l'une des revendications 1 à 6, **caractérisé en ce qu'**un système de cuisson commun pour fournir la chaleur nécessaire à la fusion des verres dans les deux cuves comprend des brûleurs à mélange gaz-oxygène montés sur les parois latérales du four.

13. Le four selon l'une des revendications 1 à 12, **caractérisé par le fait que** la gorge de chacune des cuves est montée au centre ou décalée par rapport à l'axe de la cuve dans une paroi arrière ou une paroi latérale, quel que soit l'agencement utilisé dans l'autre ou les autres cuves.
